# EUROPÄISCHE PATENTSCHRIFT

(11) **EP 1 485 218 B1**
(45) Veröffentlichungstag und Bekanntmachung des Hinweises auf die Patenterteilung: **31.05.2006**
(21) Anmeldenummer: 03709775.5
(22) Anmeldetag: 12.03.2003
(51) Int. Cl.: B22D 11/128

(54) **DREHDURCHFÜHRUNG FÜR DIE KÜHLWASSERZU- UND -ABLEITUNG EINER ENDSEITIG DREHGELAGERTEN STÜTZ- UND/ODER TRANSPORTROLLE**
REVOLVING PASSAGE FOR THE COOLING WATER INLET AND OUTLET OF A SUPPORT AND/OR TRANSPORT ROLL MOUNTED AT THE ROLL END
TRAVERSEE POUR L'ENTREE ET LE SORTIE D'EAU DE REFROIDISSEMENT D'UN ROULEAU DE TRANSPORTEUR LOGE AU BOUT DU ROULEAU

(30) Priorität: 16.03.2002 DE 10211802
(43) Veröffentlichungstag der Anmeldung: 15.12.2004
(73) Patentinhaber: ThyssenKrupp Steel AG, 47166 Duisburg (DE)
(72) Erfinder: BERGMANNS, Erich, 46539 Dinslaken (DE); GRELEWITZ, Gerhard, 47495 Rheinberg (DE); KRUME, Walter, 47495 Rheinberg (DE)
(74) Vertreter: Knauf, Rudolf
(86) Internationale Anmeldenummer: PCT/EP2003/002526
(87) Internationale Veröffentlichungsnummer: WO 2003/078093

(56) Entgegenhaltungen:
- EP-A- 0 859 676
- DE-C- 4 207 042
- DE-C- 10 006 630
- DE-C- 19 613 032
- DE-C- 19 752 336

## Beschreibung

Die Erfindung betrifft eine Drehdurchführung für die Kühlwasserzu- und ableitung einer mindestens endseitig mit Lagerzapfen in Lagerböcken drehgelagerten Stütz- und/oder Transportrolle, insbesondere in einer Stranggießanlage, mit einer mindestens einen der endseitigen Lagerzapfen abdeckenden, von dem zugehörigen Lagerbock getragenen Abdeckplatte, an der Kühlwasserleitungen angeschlossen sind, und mit einer zwischen der Lagerplatte und dem Lagerzapfen wirksamen Dichtung, die zusammen mit einer abgedichtet in der Abdeckplatte steckenden Hülse eine relative Drehbewegung zwischen der Abdeckplatte und dem Lagerzapfen erlaubt, und mit einer sich durch eine axiale Bohrung in der Stütz- und/oder Transportrolle erstreckenden Leitung für die Kühlwasserzu- bzw. -abfuhr, die mit der Bohrung und der Hülse einen Ringkanal für die Kühlwasserab- bzw.
-zufuhr bildet.

Drehdurchführungen dieser Art sind bekannt. Bei diesen Drehdurchführungen erlaubt die Dichtung zwischen der Abdeckplatte und dem Lagerzapfen sowohl Axial- als auch Pendelbewegungen der Transportrolle gegenüber den Lagerböcken und der Abdeckplatte. Bei der ersten bekannten Drehdurchführung (EP 0 859 676 B1) ist die Dichtung als ringförmige, flanschartige Membran aus flexiblem Material ausgebildet und einerseits an der Stirnseite des Lagerzapfens und andererseits mit der in der Abdeckplatte abgedichtet sitzenden, den Ringkanal begrenzenden Büchse verbunden. Bei der zweiten bekannten Drehdurchführung (DE 197 52 336Cl, DE 42 07 042 C1) weist die flexible Dichtung einen biegeweichen Schlauch auf, der einerseits an dem Lagerzapfen und andererseits an der in der Abdeckplatte sitzenden Hülse angeschlossen ist. Beide Ausführungen haben den Nachteil, daß sie wegen der geforderten Fähigkeit, Axial- und Pendelbewegungen zuzulassen, in ihrem Aufbau und der Montage recht aufwendig sind und wegen der flexiblen Teile nur eine begrenzte Standzeit haben.

Der Erfindung liegt die Aufgabe zugrunde, eine im Aufbau einfache Drehdurchführung mit langer Standzeit zu entwickeln.

Diese Aufgabe wird bei einer Drehdurchführung der eingangs genannten Art dadurch gelöst, daß
das endseitige Lager als axiales Festlager und das diesem Lager benachbarte Lager als ein axiales Loslager
ausgebildet sind, dass die Hülse mit einem Ende abgedichtet und axial fixiert in dem Lagerzapfen steckt und dass auf dem anderen in der Abdeckplatte steckenden Ende der Hülse die zwischen dem Lagerzapfen und der Abdeckplatte wirksame Dichtung sitzt, die als Radialwellendichtring gegenüber der Hülse abdichtet und in der Abdeckplatte abgedichtet und axial fixiert ist. Dabei ist insbesondere die sich durch die Bohrung und die Hülse erstreckende, zentrale Leitung von der Hülse gehalten.

Anders als bei den beiden bekannten Drehdurchführungen braucht die erfindungsgemäße Drehdurchführung keine Axialbewegungen der Rolle, sondern nur noch Pendelbewegungen aufzunehmen. Diese nicht allzu großen Ausschläge bei der Pendelbewegung lassen sich problemlos mit einem Radialwellendichtring zwischen der im Lagerzapfen fixierten Hülse und der Abdeckplatte aufnehmen. Bei den bekannten Drehdurchführungen waren dagegen mehrteilige Dichtungen mit flexiblem Kompensatorschlauch oder Flansch erforderlich. Nicht länger bedarf es eines axialen Ausgleichs nach Art eines Teleskops für die axiale Leitung. Sie kann jetzt einteilig ausgeführt und in der axial fixierten Hülse fixiert sein. Wegen des Fortfalls der flansch- oder schlauchförmigen flexiblen Teile der Dichtung ergibt sich ein wesentlich einfacherer konstruktiver Aufbau bei einer längeren Standzeit im Vergleich zu Drehdurchführungen des Standes der Technik.

Vorzugsweise besteht die Radialwellendichtung aus einem mit radialem Spiel gegenüber der Hülse angeordneten, starren Ringkörper, in dem mindestens in einer der Hülse zugewandten inneren Nut ein Rotationsring sitzt, der einerseits auf der Hülse abdichtend sitzt und andererseits bei radialer Beweglichkeit in der Nut an deren beiden Stirnseiten abdichtet, und in dem in mindestens einer äußeren Ringnut eine O-Ring-Dichtung sitzt, die gegenüber einer Dichtfläche der Abdeckplatte abdichtet. Solche Dichtungen sind an sich bekannt und sind im Handel unter der Markenbezeichnung "Prelonring" erhältlich. Die besonderen Vorteile einer solchen Dichtung bestehen darin, daß sie Pendelbewegungen und Mittigkeitsabweichungen bis zu einigen Millimetern bei zuverlässiger Dichtwirkung zuläßt. Ihre Reibungsverluste zwischen den relativ zueinander bewegten Teilen sind dagegen gering.

Nach einer weiteren Ausgestaltung der Erfindung weist die Hülse an ihrem der Abdeckplatte abgewandten Ende einen Befestigungskopf auf, durch den die Leitung paßgenau hindurchgeführt ist und der Durchlässe für das Kühlmittel zwischen verschiedenen axialen Abschnitten des Ringkanals aufweist.

Im folgenden wird die Erfindung anhand einer ein Ausführungsbeispiel darstellenden Zeichnung näher beschrieben. Im einzelnen zeigen:
- Fig. 1: eine Drehdurchführung im Bereich einer endseitigen Lagerung und
- Fig. 2: ein Detail V der Fig. 1 in vergrößerter Darstellung.

Eine wassergekühlte Stütz- und/oder Transportrolle 1 weist im äußeren Bereich axial verlaufende Kanäle 2 und darin einmündende bzw. davon ausgehende und zu einem zentralen Verteilsystem führende Kanäle 3 auf. Das zentrale Verteilsystem besteht aus einer mittigen Bohrung 4 in der Stütz- und/oder Transportrolle 1 und einer darin angeordneten, rohrförmigen Leitung 5, die einen zentralen Zuführungskanal 6 für das Kühlwasser und mit der Bohrung 4 einen Ringkanal 7 für die Abführung des Kühlwassers bildet.

Die Leitung 5 weist an ihrem Ende einen Sperrring 8 auf, der den Ringkanal 7 vom einem hinteren Abschnitt der Bohrung 4 trennt, damit das über die Leitung 5 zugeführte Kühlmittel zirkuliert und über die axial verlaufenden Kanäle 2 und die Kanäle 3 in den Ringkanal 7 zurückgeführt wird.

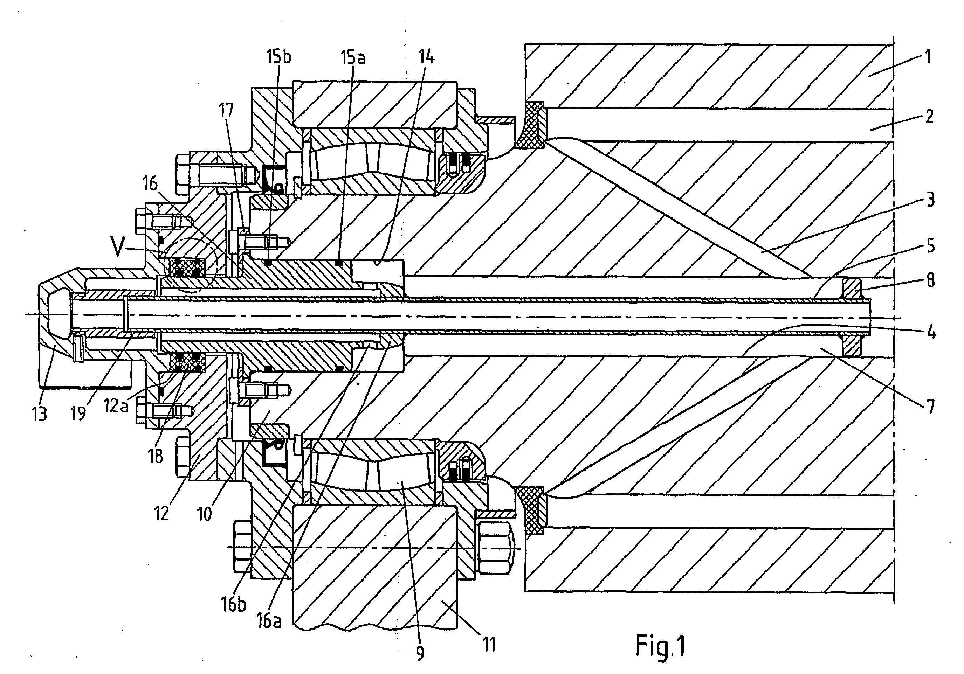

In Fig. 1 ist nur ein Teil der Stützrolle 1 gezeigt. In der Regel besteht die Stützrolle aus zwei oder mehr Abschnitten, von denen jeder Abschnitt endseitig gelagert ist (DE 100 03 846 Al). Von den Lagern eines Stützrollenabschnittes ist ein Lager als axiales Festlager und ein Lager als Loslager ausgebildet. Das in der Zeichnung nicht dargestellte Lager ist als Loslager derart ausgebildet, daß es Axialbewegungen und Pendelbewegungen der Stützrolle 1 aufzunehmen imstande ist. Dafür geeignete Lager sind beispielsweise von der Fa. SKF unter der Bezeichnung "CARB" am Markt erhältliche Rollenlager oder Pendelrollenlager. Das andere, in der Zeichnung dargestellte Lager 9 ist dagegen ein axiales Festlager, das Pendelbewegungen aufnehmen kann. Eine typische Bauart für ein solches Lager ist das in der Zeichnung dargestellte Pendelrollenlager.

Die Stützrolle 1 ist mit ihrem Lagerzapfen 10 über das schon erwähnte Lager 9 in einem stationären Lagerbock 11 gelagert. An einer Stirnseite des Lagerbockes 11 ist eine Abdeckplatte 12 befestigt, die einen Verteilerkopf 13 mit Steckaufnahmen für Zu- und Ableitungen für Kühlwasser aufweist.

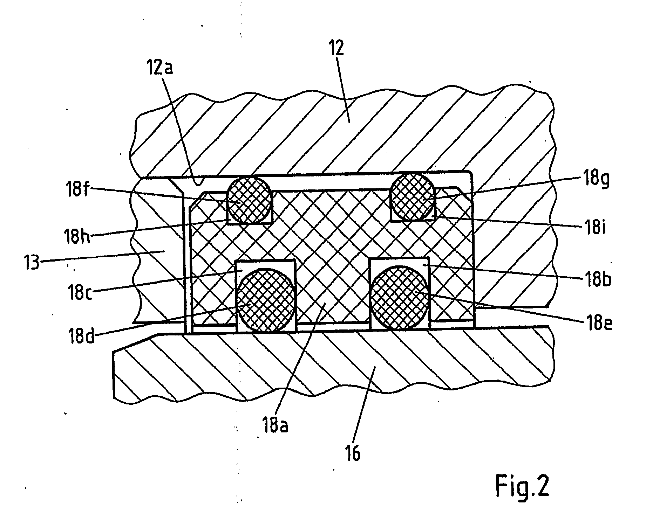

In einer endseitigen zentralen Bohrung 14 des Lagerzapfens 10 sitzt mit O-Ringdichtungen 15a, 15b abgedichtet eine Hülse 16, die stirnseitig am Lagerzapfen 10 mit einem Montagering 17 axial- und drehfest gehalten ist. Mit einem im Querschnitt kleineren Abschnitt erstreckt sich die Hülse 16 bis in die Abdeckplatte 12, wo sie mit einem Radialwellendichtring 18 drehbeweglich abgedichtet ist. Wie Fig. 2 zeigt, besteht dieser Radialwellendichtring 18 aus einem starren Ringkörper 18a, in dem auf der Seite der Hülse 16 zwei Ringnuten 18b, 18c vorgesehen sind, in denen jeweils ein drehfest und abdichtend auf der Hülse 16 sitzender Rotationsring 18d, 18e gehalten ist. Jeder Rotationsring 18d, 18e ist in der Nut 18b, 18c in radialer Richtung beweglich, wobei er aber an den zugehörigen radialen Flächen abdichtet. Darüber hinaus sind O-RingDichtungen 18f, 18g in äußeren Ringnuten 18h, 18i vorgesehen, die gegenüber einer zylindrischen Fläche 12a der Abdeckplatte 12 abdichten. Es versteht sich, daß für die Abdichtung der drehbeweglichen Hülse 16 gegenüber der drehfesten Abdeckplatte 12 auch andere Ringdichtungen als der Radialwellendichtring 18 des Ausführungsbeispiels geeignet sind.

Die rohrförmige zentrale Leitung 5 steckt mit ihrem einen Ende in einem im Verteilerkopf 13 fixierten Ansatz 19. Darüber hinaus ist die Leitung 5 in einem Befestigungskopf 16a der Hülse 16 gehalten, durch den sie paßgenau hindurchgeführt und daran angeschweißt ist. Unmittelbar vor dem Kopf 16a weist die Hülse 16 radiale Durchlässe 16b auf, über die die Abschnitte des Ringkanals 7 zwischen der Leitung 5 und der Bohrung 4 und zwischen der Leitung 5 und der Hülse 16 miteinander verbunden sind.

Die besonderen Vorteile der Erfindung bestehen darin, daß im Bereich der endseitigen Lagerung der Stütz- und/oder Transportrolle 1 keine axiale Bewegungen kompensierenden Bauteile erforderlich sind. Deshalb kann die zentrale axiale Leitung 5 mit der Hülse 16 am Lagerzapfen 10 fixiert sein. Die einzige Relativbewegung, die als Pendelbewegungen zwischen der Stütz- und/oder Transportrolle 1 und der am stationären Lagerbock 11 fixierten Abdeckplatte 12 mit Verteilerkopf 13 stattfindet kann von der als Radialwellendichtring ausgebildeten Dichtung 12 zwischen der am Lagerzapfen 10 starr fixierten Hülse 16 und der stationären Abdeckplatte 12 problemlos aufgenommen werden. Das alles erlaubt eine einfachere konstruktive Gestaltung, was sich auch positiv auf die Wartungsfreundlichkeit auswirkt.

## Patentansprüche

1. Drehdurchführung für die Kühlwasserzu- und ableitung einer mindestens endseitig mit Lagerzapfen (10) in Lagerböcken (11) drehgelagerten Stütz- und/oder Transportrolle (1), insbesondere in einer Stranggießanlage, mit einer mindestens einen der endseitigen Lagerzapfen (10) abdeckenden, von dem zugehörigen Lagerbock (11) getragenen Abdeckplatte (12), an der Kühlwasserleitungen angeschlossen sind, und mit einer zwischen der Lagerplatte (12) und dem Lagerzapfen (10) wirksamen Dichtung (18), die zusammen mit einer abgedichtet in der Abdeckplatte (12) steckenden Hülse (16) eine relative Drehbewegung zwischen der Abdeckplatte (12) und dem Lagerzapfen (10) erlaubt, und mit einer sich durch eine axiale Bohrung (4) in der Stütz- und/oder Transportrolle (1) erstreckenden Leitung (5) für die Kühlwasserzu- bzw.- abfuhr, die mit der Bohrung (4) und der Hülse (16) einen Ringkanal (7) für die Kühlwasserab- bzw.
-zufuhr bildet,
**dadurch gekennzeichnet, dass**
das endseitige Lager (9) als axiales Festlager und das diesem Lager (9) benachbarte Lager als ein axiales Loslager ausgebildet sind, dass die Hülse (16) mit einem Ende abgedichtet und axial fixiert in dem Lagerzapfen (10) steckt und dass auf dem anderen in der Abdeckplatte (12) steckenden Ende der Hülse (16) die zwischen dem Lagerzapfen (10) und der Abdeckplatte (12) wirksame Dichtung (18) sitzt, die als Radialwellendichtring gegenüber der Hülse (16) abdichtet und in der Abdeckplatte (12) abgedichtet und axial fixiert ist.

2. Drehdurchführung nach Anspruch 1,
**dadurch gekennzeichnet, dass**
die sich durch die Bohrung (4) und die Hülse (16) erstreckende, zentrale Leitung (5) von der Hülse (16) gehalten ist.

3. Drehdurchführung nach Anspruch 1 oder 2,
**dadurch gekennzeichnet, dass**
die Radialwellendichtung (18) aus einem mit radialem Spiel gegenüber der Hülse (16) angeordneten, starren Ringkörper (18a) besteht, in dem in mindestens einer der Hülse (16) zugewandten inneren Ringnut (18b, 18c) ein Rotationssring (18d, 18e) sitzt, der einerseits auf der Hülse (16) abdichtend sitzt und andererseits bei radialer Beweglichkeit in der Nut (18b, 18c) an deren beiden Stirnseiten abdichtet, und in dem in mindestens einer äußeren Ringnut (18h, 18i) eine O-Ringdichtung (18f, 18g) sitzt, die gegenüber einer Dichtfläche (12a) der Abdeckplatte (12) abdichtet.

4. Drehdurchführung nach einem der Ansprüche 1 bis 3,
**dadurch gekennzeichnet, dass**
die Hülse (16) an ihrem der Abdeckplatte (12) abgewandten Ende einen Befestigungskopf (16a) aufweist, durch den die Leitung (5) passgenau hindurchgeführt ist und der Durchlässe (16b)für das Kühlmittel zwischen verschiedenen axialen Abschnitten des Ringkanals (7) aufweist.

## Claims

1. A rotary lead-through for the coolant inflow and outflow of a back-up and/or conveyor roller (1) which is held in a bearing arrangement at the end at least by means of bearing journals (10) located in bearing blocks (11), in particular in a continuous casting plant, comprising a covering plate (12) which covers at least one of the bearing journals (10) at the end, wherein said covering plate (12) is supported by the associated bearing block (11), wherein coolant lines are connected to said rotary lead-through, and comprising a seal (18) which acts between the bearing plate (12) and the bearing journal (10), which seal (18), together with a sleeve (16) inserted in the cover plate (12) so as to be sealed, makes possible relative rotary movement between the covering plate (12) and the bearing journal (10), and comprising a line (5) for coolant inflow and outflow, wherein said line (5) extends through an axial borehole (4) in the back-up and/or conveyor roller (1), wherein said line (5) for coolant inflow and outflow, together with the borehole (4) and the sleeve (16), forms a ring channel (7) for coolant inflow and outflow,
**characterised in that**
the bearing (9) at one end is a fixed axial bearing, while the bearing adjacent to said bearing (9) is a detached axial bearing; **in that** the sleeve (16) has been inserted into the bearing journal (10) so as to be sealed at one end and so as to be axially fixed; and **in that** on the other end of the sleeve (16), which end has been inserted in the covering plate (12), the seal (18) is seated which is effective between the bearing journal (10) and the covering plate (12), which seal (18), as a rotary shaft sealing ring, provides sealing action to the sleeve (16) and is sealed and axially fixed in the covering plate (12).

2. The rotary lead-through according to claim 1,
**characterised in that**
the central line (5) which extends through the borehole (4) and the sleeve (16) is held by the sleeve (16).

3. The rotary lead-through according to claim 1 or 2,
**characterised in that**
the rotary shaft seal (18) comprises a rigid ring body (18a) which is arranged with radial play in relation to the sleeve (16), wherein at least one inner ring groove (18b, 18c) which faces the sleeve (16) comprises a rotation ring (18d, 18e) which on the one hand is seated on the sleeve (16) so as to provide a seal, and on the other hand, while maintaining radial mobility, provides a seal in the groove (18b, 18c) at the two faces of said groove (18b, 18c); and wherein in at least one outer ring groove (18h, 18i) of said rotation ring (18d, 18e) an O-ring seal (18f, 18g) is seated which provides a seal on a sealing face (12a) of the covering plate (12).

4. The rotary lead-through according to any one of claims 1 to 3,
**characterised in that**
at its end facing away from the covering plate (12), the sleeve (16) comprises an attachment head (16a) through which the line (5) leads with a precise fit, with said attachment head (16a) comprising openings (16b) for the coolant between various axial sections of the ring channel (7).

## Revendications

1. Traversée rotative pour l'amenée et l'évacuation d'eau de refroidissement dans un rouleau (1) de soutien et/ou de transport monté à rotation dans des supports de positionnement (11) au moyen de tourillons de positionnement (10), en particulier dans une installation de coulée continue, qui présente au moins une plaque de recouvrement (12) qui recouvre au moins un des tourillons de positionnement (10) d'extrémité, qui est soutenue par le support de positionnement (11) associé et à laquelle sont raccordées des conduits d'eau de refroidissement, qui présente un joint d'étanchéité (18) qui agit entre la plaque de recouvrement (12) et le tourillon de positionnement (10) et qui permet un déplacement relatif de rotation entre la plaque de recouvrement (12) et le tourillon de positionnement (10) par une douille (16) rendue étanche qui pénètre dans la plaque de recouvrement (12), et qui présente un conduit (5) destinée à l'amenée ou à l'évacuation de l'eau de refroidissement et qui, par l'intermédiaire d'un alésage axial (4), s'étend dans le rouleau (1) de soutien et/ou de transport et forme un canal annulaire (7) d'amenée ou d'évacuation de l'eau de refroidissement avec l'alésage (4) et la douille (16),
**caractérisée en ce que** le support (9) d'extrémité et le support voisin de ce support (9) sont réalisés respectivement comme support axial fixe et comme support axial mobile, **en ce que** la douille (16), dont une extrémité est rendue étanche et qui est fixée axialement pénètre dans le tourillon de positionnement (10) et **en ce que** le joint d'étanchéité (18) qui agit entre le tourillon de positionnement (10) et la plaque de recouvrement (12), est situé à l'autre extrémité de la douille (16), pénètre dans la plaque de recouvrement (12) et comme anneau d'étanchéité à ondulations radiales, assure l'étanchéité avec la douille (16) et est fixé axialement et de manière étanche dans la plaque de recouvrement (12).

2. Traversée rotative selon la revendication 1,
**caractérisée en ce que** le conduit central (5) qui s'étend à travers l'alésage (4) et la douille (16) est maintenu par la douille (16).

3. Traversée rotative selon les revendications 1 ou 2, **caractérisée en ce que** l'anneau d'étanchéité à ondulation radiale (18) est constitué d'un corps annulaire rigide (18a) agencé de manière à présenter un jeu radial par rapport à la douille (16), un anneau de rotation (18d, 18e) étant agencé dans au moins l'une des rainures annulaires intérieures (18b, 18c) orientées vers la douille (16) et, d'une part, repose de manière étanche sur la douille (16) et, d'autre part, tout en pouvant se déplacer radialement dans la rainure (18b, 18c), assure l'étanchéité de ses deux côtés frontaux, un joint d'étanchéité torique (18f, 18g) étant agencé dans au moins une rainure annulaire extérieure (18h, 18i) et assure l'étanchéité d'une surface d'étanchéité (12a) de la plaque de recouvrement (12).

4. Traversée rotative selon l'une des revendications 1 à 3, **caractérisée en ce qu'**à son extrémité qui n'est pas orientée vers la plaque de recouvrement (12), la douille (16) présente une tête de fixation (16a) que le conduit (5) traverse de manière précisément adaptée et qui présente des passages (16b) pour l'agent de refroidissement entre différents tronçons axiaux du canal annulaire (7).
